# EUROPÄISCHE PATENTANMELDUNG

(11) **EP 4 257 387 A1**
(43) Veröffentlichungstag der Anmeldung: **11.10.2023**
(21) Anmeldenummer: 23166264.4
(22) Anmeldetag: 03.04.2023
(51) Int. Cl.: B60J 11/04, A01F 25/13

(54) **ABDECKSYSTEM**

(30) Priorität: 05.04.2022 DE 202022101821 U
(71) Anmelder: Reichert, Werner, 93049 Regensburg (DE); Schambeck, Josef-Michael, 94365 Parkstetten (DE)
(72) Erfinder: Reichert, Werner, 93049 Regensburg (DE); Schambeck, Josef-Michael, 94365 Parkstetten (DE)
(74) Vertreter: Reichert & Lindner Partnerschaft Patentanwälte

(57) **Zusammenfassung**

Ein Abdecksystem für ein abzudeckendes Objekt (2) umfasst eine Plane (5), der jeweils ein Endprofil (3) mit einer Rinne (12) an jedem Ende (6) der Plane (5) angebracht ist. Ferner ist mindestens ein Profil (4) zwischen den Endprofilen (3) und parallel zu diesen mit einer Innenfläche (15) der Plane (5) verbunden.

## Beschreibung

Die Erfindung betrifft ein Abdecksystem. Mit dem Abdecksystem kann ein abzudeckendes Objekt abgedeckt werden. Das Abdecksystem umfasst hierzu eine Plane.

### Stand der Technik

DE 10 2014 213 754 B3 betrifft eine Spannvorrichtung für eine Mehrzweckabdeckplane. Die Spannvorrichtung wird einerseits mittels einer Öse an der Mehrzweckabdeckplane eingehängt und andererseits über ein Einschlagteil an einem Holzscheit befestigt.

DE 20 2006 000 265 U1 umfasst ein Abdecksystem mit einer im Randbereich verstärkten Abdeckeinheit. Die Längsseiten der Abdeckeinheit sind ebenfalls verstärkt. Die Abdeckeinheit ist 1,0 bis 1,5 m, insbesondere 1,2 oder 1,3 m breit. Die Abdeckeinheit hat ein Gewicht von 250 g/m² und ist UV-beständig, wasserdicht und abwaschbar. Das Abdecksystem ist mit einer elastischen Halterung versehen.

DE 20 2012 010 915 U1 betrifft ein System zur Abdeckung eines quaderförmig gestapelten Holzstoßes. Die Abdeckung umfasst mindestens ein dünnes, plattenartiges, quer zum Holzstoß gewölbtes Bauteil. An dem gewölbten Bauteil ist an seinen vor und hinter dem Holzstoß verlaufenden Kanten jeweils ein annähernd senkrecht verlaufender Randstreifen vorgesehen, der über bandartige Befestigungselemente mit dem Holzstoß verbindbar ist.

In zunehmendem Maße wird Holz als Brenn- beziehungsweise Heizmaterial benutzt. Das zu Scheiten mit einer Länge von etwa 1,00 m zugeschnittene Holz muss vor seiner Verbrennung über einen längeren Zeitraum getrocknet werden. Für diesen Trocknungsprozess wird das geschnittene Holz zu einem quaderförmigen Holzstoß gestapelt, der dann zum Schutz gegen Regen und Schnee mit mindestens einer, beispielsweise folienartigen, Plane abgedeckt wird. Um die Lage einer solchen Abdeckplane auf dem Holzstoß zu sichern, werden auf den Holzstoß zurückgehaltene Holzscheite gelegt, die jedoch ihrerseits immer dem Wetter, insbesondere Regen und Schnee ausgesetzt sind. Da zudem die auf dem Markt erhältlichen Abdeckplanen keine für einen solchen Zweck nutzbare Größe aufweisen, hängt die Abdeckplane meist vorne und hinten um ein nicht unbeträchtliches Maß vom Holzstoß herab, was die Durchlüftung und damit die Trocknung des Holzstoßes beeinträchtigt. Vielfach wird auch eine zu breite Abdeckplane an ihren Seiten eingeschlagen und zwischen den Holzscheiten festgeklemmt. Dies wirkt sich allerdings ebenfalls nachteilig auf die Trocknung des Holzes aus. Darüber hinaus besteht bei einer derartigen Abdeckung eines Holzstoßes immer die Gefahr, dass es bei Sturm, insbesondere bei starken Windböen, zu Beschädigungen und Verwehungen der Abdeckplane kommen kann. Es kommt schließlich auch noch hinzu, dass das Aufbringen und Sichern der Abdeckplane auf dem Holzstoß verhältnismäßig mühsam und zeitraubend ist. Schlussendlich ist nicht auszuschließen, dass die verwendete folienartige Abdeckplane durch weitere äußere Einwirkungen reißen kann. Die Durchlüftung des Holzstoßes ist daher, insbesondere in seinem oberen Bereich, unbefriedigend.

### Kurze Beschreibung der Erfindung

Aufgabe der Erfindung ist, ein Abdecksystem für ein abzudeckendes Objekt bereitzustellen, welches Abdecksystem zuverlässig und einfach von einer Person auf dem abzudeckenden Objekt anzubringen und zu entfernen ist und dabei zuverlässig das abzudeckende Objekt vor Witterungseinflüssen, wie beispielsweise Regen oder Schnee, schützt.

Diese Aufgabe wird durch ein Abdecksystem gelöst, das die Merkmale des Anspruchs 1 umfasst.

Gemäß einer Ausführungsform des Abdecksystems für ein abzudeckendes Objekt umfasst das Abdecksystem eine Plane, bevorzugt eine Gewebeplane. Dabei ist an jedem Ende der Plane jeweils ein Endprofil mit der Plane verbunden. Das Endprofil hat eine Rinne ausgebildet. Ferner ist mindestens ein Profil an einer Innenfläche der Plane zwischen den Endprofilen und parallel zu diesen mit der Plane verbunden. Das Abdecksystem besitzt eine Länge, die größer als eine Länge des abzudeckenden Objekts ist, und eine Breite, die größer als eine Breite des abzudeckenden Objekts ist.

Der Vorteil des Abdecksystems ist, dass es durch die beiden Endprofile und das mindestens eine Profil zwischen den beiden Endprofilen für eine Person einfach ist, das Abdecksystem auch bei widrigen Wetterbedingungen zuverlässig auf dem abzudeckenden Objekt anzubringen beziehungsweise zu entfernen. Zudem wird etwaiges Regenwasser oder Schmelzwasser in den Rinnen der Endprofile des Abdecksystems gesammelt und von dem abzudeckenden Objekt effektiv weggeführt. Das abzudeckende Objekt kann beispielsweise ein Holzstoß, ein Wohnanhänger, ein Anhänger etc. sein, ohne Beschränkung der Erfindung darauf.

Gemäß einer Ausführungsform ist das Profil an der Innenfläche der Plane angeklebt oder in einer Aufnahme an der Innenfläche eingeschoben und dort befestigt.

Gemäß einer vorteilhaften Ausgestaltung der Erfindung trägt jedes Ende der Plane einen Keder, der entlang der Breite der Plane ausgebildet ist. Der Vorteil des Keders ist, dass die Enden der Plane auf einfache Weise mit den Endprofilen verbunden werden können. Um dies zu erreichen, hat jedes Endprofil bevorzugt eine Kederschiene ausgebildet. Der Keder wird zur Befestigung in die Kederschiene eingeschoben. Der in der Kederschiene montierte Keder des jeweiligen Endes der Plane wirkt formschlüssig mit der Kederschiene des Endprofils zusammen.

Gemäß einer Ausführungsform des Abdecksystems hat dieses an einer Unterseite der Rinne des Endprofils mindestens zwei Haken angebracht. Die Haken sind bevorzugt beweglich angebracht. Die mindestens zwei Haken sind entlang einer Länge des Endprofils angeordnet. Im Wesentlichen sind Haken entlang der Länge des Endprofils gleichverteilt angeordnet. Die Beweglichkeit eines jeden am Endprofil oder am Profil oder am Rand der Plane selbst angebrachten Hakens wird beispielsweise dadurch erreicht, dass jeder Haken in einem Lager sitzt und somit nur um eine Achse des Lagers schwenkbar ist. Ein Vorteil der schwenkbaren Haken ist, dass sie beim Aufrollen der Plane einklappen und somit das Aufrollen nicht behindern, sondern erleichtern und somit auch eine Beschädigung der Plane des Abdecksystems vermieden wird.

Gemäß einer vorteilhaften Ausführungsform sind mehrere Sicherungseinrichtungen am Abdecksystem vorgesehen. Die Sicherungseinrichtungen sind mit dem abzudeckenden Objekt lösbar verbindbar. Ein Vorteil der mehreren Sicherungseinrichtungen ist, insbesondere wenn sie gleichverteilt am Abdecksystem angebracht sind, dass das Abdecksystem bei Windböen beziehungsweise Starkwind immer noch zuverlässig und sicher am abzudeckenden Objekt liegt.

Es gibt mehrere Ausführungsformen der Sicherungseinrichtungen, mit denen das Abdecksystem am abzudeckenden Objekt gesichert werden soll. Üblicherweise sind mehrere der Sicherungseinrichtungen am Abdecksystem vorgesehen undmit dem abzudeckenden Objekt lösbar verbindbar, um die Sicherung zu erzielen.

Gemäß einer Ausführungsform besteht die Sicherungseinrichtung aus einem Haken, beispielsweise aus einem beweglichen Haken, dem ein Sicherungsband zugeordnet ist. Das Sicherungsband hat beispielsweise in einem Bereich eine erste Öse ausgebildet, über die das Sicherungsband am Haken einhängbar ist. In einer speziellen Ausführungsform kann das am Haken eingehängte Sicherungsband dann über mindestens eine zweite Öse im Sicherungsband mit dem abzudeckenden Objekt lösbar verbunden werden. Die mindestens eine zweite Öse ist im Sicherungsband gegenüber dem vorgenannten Bereich des Sicherungsbandes, welcher Bereich die erste Öse aufweist, eingebracht.

Ferner kann die Sicherungseinrichtung beispielsweise aus einem Haken und einem am Haken einhängbaren Gewicht bestehen. Das Gewicht umfasst beispielsweise eine Einhängeöse, mit der das Gewicht am Haken.

Gemäß einer weiteren Ausführungsform der Sicherungseinrichtung besteht diese aus einem Profil, das mit der Innenfläche der Plane verbunden ist, und einem am Profil direkt angebrachten Sicherungsband. Bevorzugt sind zwei Sicherungsbänder am Profil angebracht beziehungsweise mit diesem verbunden, so dass die Sicherungsbänder mit den beiden Seiten des abzudeckenden Objekts zusammenwirken. Bevorzugt sind mindestens zwei Sicherungsbänder mit jedem der an der Innenfläche der Plane angebrachten Profile verbunden und über die Ösen gegenüber dem Bereich des Sicherungsbandes mit dem abzudeckenden Objekt lösbar verbindbar.

Gemäß einer weiteren Ausführungsform des Abdecksystems können entlang der beiden Längsseiten der Plane mehrere Sicherungseinrichtungen vorgesehen sein. Die Sicherungseinrichtung entlang der beiden Längsseiten der Plane können beispielsweise jeweils einen Haken und ein Sicherungsband umfassen. Das Sicherungsband ist derart gestaltet, dass es am Haken eingehängt und mit dem abzudeckenden Objekt verbunden werden kann.

Gemäß einer vorteilhaften Ausgestaltung ist das Abdecksystem zum Transport und zur Handhabung von mindestens einem Endprofil des Abdecksystems ausgehend aufrollbar. In einer Ausführungsform umschließt ein Sicherungsriemen das aufgerollte Abdecksystem und sichert es so gegen ein Entrollen. Ein Verschluss kann bei Bedarf zum Öffnen oder Schließen des Sicherungsriemens dienen. Ebenso kann der Sicherungsriemen mit mindestes einem Tragegriff versehen sein.

### Kurze Beschreibung der Zeichnungen

Anhand der beigefügten Zeichnungen werden nun die Erfindung und ihre Vorteile durch Ausführungsbeispiele näher erläutert, ohne dadurch die Erfindung auf die gezeigten Ausführungsbeispiele zu beschränken. Die Größenverhältnisse in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
**Figur 1** zeigt eine Draufsicht auf eine Ausführungsform des erfindungsgemäßen Abdecksystems, das beispielsweise auf einen Holzstoß zu dessen Abdeckung aufgebracht werden kann.
**Figur 2** zeigt in Seitenansicht einer Ausführungsform der Verbindung eines der Endprofile mit der Plane des Abdecksystems.
**Figur 3** zeigt eine Seitenansicht eines Holzstoßes, der mit einer Ausführungsform des erfindungsgemäßen Abdecksystems abgedeckt und geschützt ist.
**Figur 4** zeigt eine Seitenansicht eines Holzstoßes, der mit einer weiteren Ausführungsform des erfindungsgemäßen Abdecksystems abgedeckt und geschützt ist.
**Figur 5** zeigt eine vergrößerte Seitenansicht einer Ausführungsform des Endprofils, das jeweils an den Enden der Plane des Abdecksystems vorgesehen ist.
**Figur 6** zeigt eine Frontansicht der Ausführungsform eines der Endprofile, das jeweils an den Enden der Plane des Abdecksystems angebracht ist.
**Figur 7** zeigt eine Draufsicht auf eine Ausführungsform eines Sicherungsbandes, das bei einer Sicherungseinrichtung Verwendung findet.
**Figur 8** zeigt eine schematische Ansicht eines Gewichts, das bei einer Ausführungsform der Sicherungseinrichtung Verwendung findet.
**Figur 9** zeigt eine erste Ausführungsform des Abdecksystems in einer Transportstellung.
**Figur 10** zeigt eine zweite Ausführungsform des Abdecksystems in einer Transportstellung.
**Figur 11** zeigt eine Seitenansicht einer Ausführungsform eines Wohnanhängers, der mit einer Ausführungsform des erfindungsgemäßen Abdecksystems abgedeckt und geschützt ist.
**Figur 12** zeigt eine Seitenansicht einer Ausführungsform eines Anhängers, der mit einer Ausführungsform des erfindungsgemäßen Abdecksystems abgedeckt und geschützt ist.

### Ausführliche Beschreibung der Zeichnungen und Ausführungsformen

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die Figuren stellen lediglich Ausführungsbeispiele der Erfindung dar, ohne jedoch die Erfindung auf die dargestellten Ausführungsbeispiele zu beschränken.

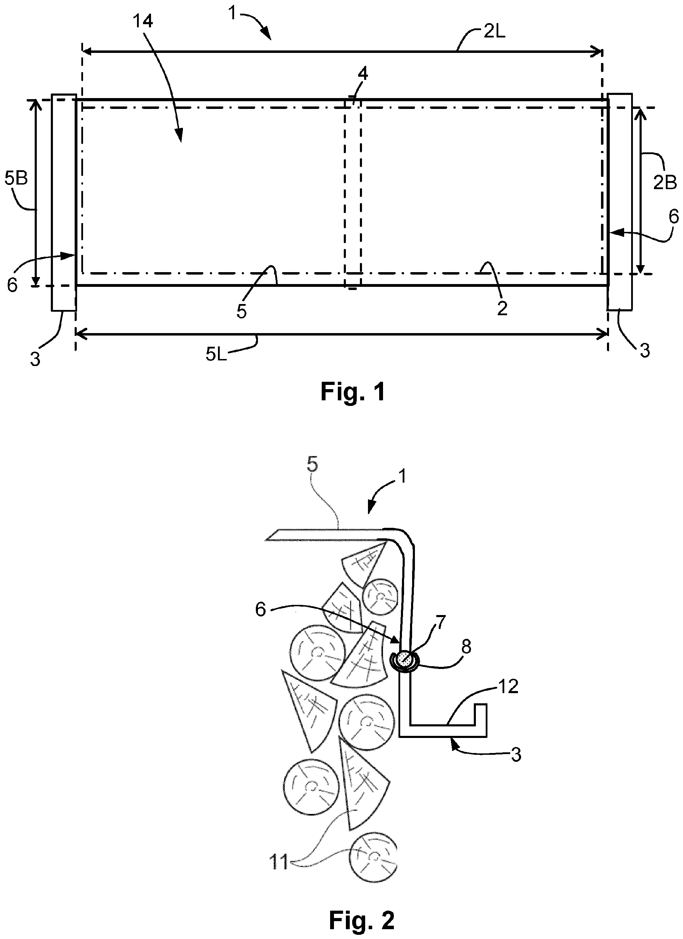

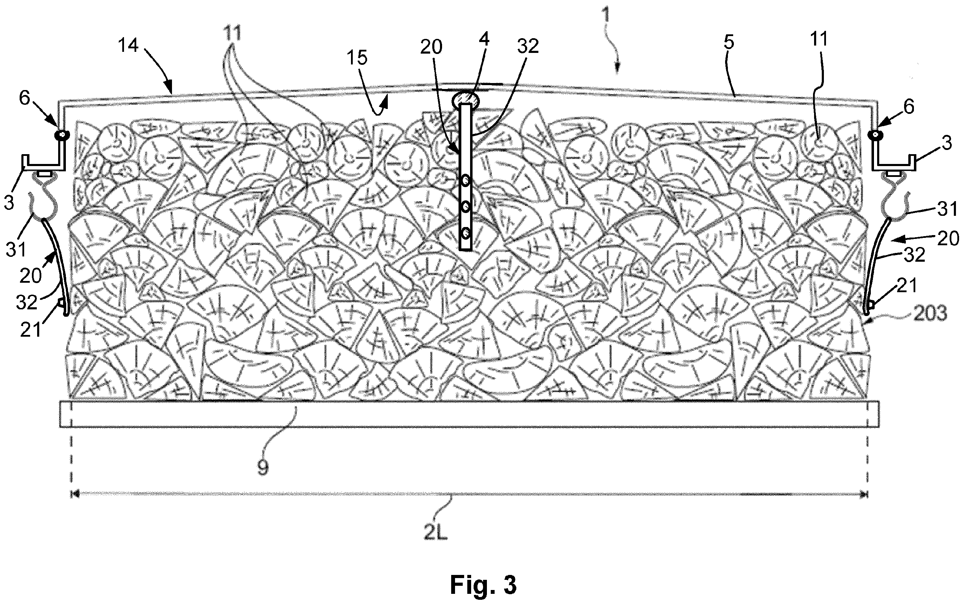

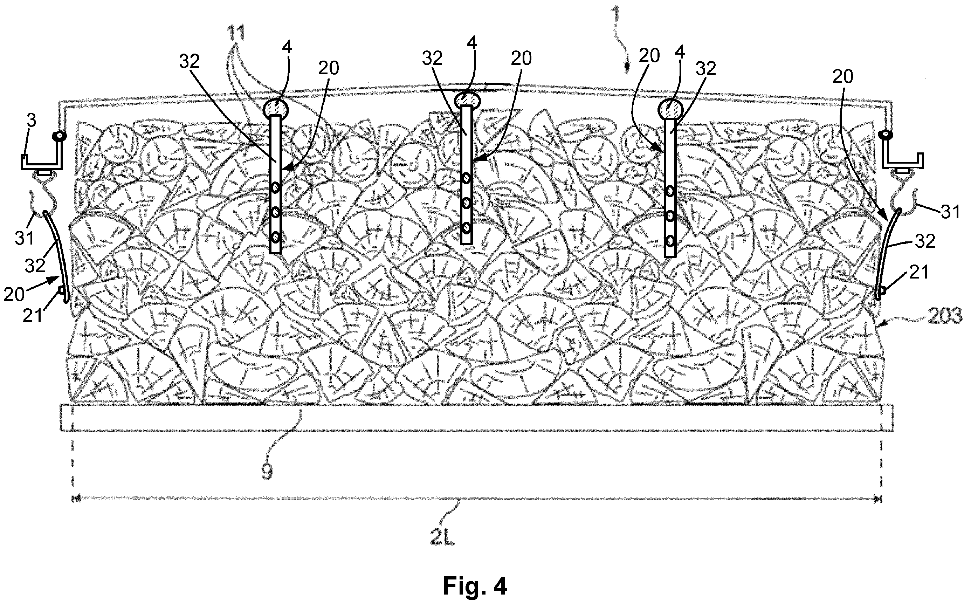

**Figur 1** zeigt eine Draufsicht auf eine Ausführungsform eines Abdecksystems **1** für ein abzudeckendes Objekt **2,** das in der hier dargestellten Ausführungsform ein Holzstoß **203** ist. Das Abdecksystem **1** weist eine Breite **5B** auf, die größer als eine Breite **2B** des quaderförmigen Holzstoßes **203** (siehe auch Fign. 3 und 4) ist. Ebenso besitzt das Abdecksystem **1** eine Länge **5L,** die größer als eine Länge **2L** des quaderförmigen Holzstoßes **203** ist. Auf jeden Fall ist die Länge **5L** des Abdecksystems **1** derart bemessen, dass die beiden Endprofile **3** entlang der Breite **2B** des Holzstoßes **203** anliegen beziehungsweise entlang der Breite **2B** herunterhängen. Zwischen den beiden Endprofilen **3** ist mindestens ein Profil 4 (gestrichelt dargestellt, da unterhalb der Plane **5**) gegenüber einer Außenfläche **14** der Plane **5** angebracht.

**Figur 2** zeigt eine Seitenansicht einer Ausführungsform eines der Endprofile **3** des Abdecksystems **1,** das an der Plane **5** angebracht ist. Die Plane **5** des Abdecksystems **1** ist mit den Endprofilen **3** verbunden. Zur Verbindung der Plane **5** mit den Endprofilen **3** hat die Plane **5** beispielsweise an jedem Ende **6** einen Keder **7** ausgebildet, der beispielsweise mit einer Kederschiene **8** beziehungsweise einer Kederaufnahme am Endprofil **3** formschlüssig zusammenwirkt. Jedes Endprofil **3** hat eine Rinne **12** ausgebildet, mittels der Regenwasser oder Schmelzwasser gesammelt und vom Abdecksystem **1** abgeleitet werden kann.

**Figur 3** zeigt eine Seitenansicht eines Holzstoßes **203,** der ein mögliches abzudeckendes Objekt **2** sein kann, das mit einer Ausführungsform des erfindungsgemäßen Abdecksystems **1** abgedeckt und geschützt ist. Der Holzstoß **203** besteht aus einer Vielzahl von aufgeschichteten Holzscheiten **11.** Die Holzscheite **11,** die noch nicht zu Brenn- oder Kaminholz verarbeitet sind, haben in der Regel eine Länge von circa, ohne Beschränkung der Erfindung, einem Meter, und folglich beträgt die Breite **2B** (siehe Fig. 1) des Holzstoßes **203** ebenfalls circa einen Meter. Geringere Breiten des Holzstoßes **203** sind vorstellbar, wenn Brenn- oder Kaminholz verarbeitet wird.

Die noch nicht zu Brenn- oder Kaminholz verarbeiteten Holzscheite **11** des Holzstoßes **203** werden in vorteilhafter Weise auf einer Auflage **9** aufgestapelt, damit die Holzscheite **11** nicht unmittelbar auf dem (Erd-)Boden liegen. Das unmittelbare Aufliegen auf dem Boden würde die Trocknung der Holzscheite **11** behindern. Auf der dem Boden abgewandten Oberseite des Holzstoßes **203** ist dieser mit dem erfindungsgemäßen Abdecksystem **1** versehen.

Das Abdecksystem **1** umfasst die Plane **5,** die vorzugsweise eine wasserundurchlässige Gewebeplane ist. Die Plane **5** weist eine Länge **5L** auf, die an beiden Enden **6** jeweils mit einem Endprofil **3** versehen ist. Zwischen den beiden Endprofilen **3** ist die Plane **5** mit mindestens einem Profil **4** verbunden, das parallel zu den Endprofilen **3** verläuft. Der Holzstoß **203** besitzt eine Länge **2L.** Das Abdecksystem **1** ist derart bemessen, dass es die Länge **2L** des Holzstoßes **2** überragt und die beiden Endprofile **3** des Abdecksystems **1** an beiden Enden des Holzstoßes **203** herabhängen.

Gemäß der Ausführungsform nach **Fig. 3** ist die Plane **5** an deren Innenfläche **15** zwischen den Endprofilen **3** beispielsweise mit einem einzigen Profil **4** versehen. Wie in **Fig.** 4 gezeigt, soll die Ausführungsform mit einem einzigen Profil **4** (siehe Fig. 3) zwischen den Endprofilen **3** jedoch nicht als Beschränkung der Erfindung aufgefasst werden. Wie anhand der **Fig. 4** zu erkennen ist, können mindestens zwei Profile **4** zwischen den Endprofilen **3** an der Innenfläche **15** der Plane **5** angebracht sein. Bei der Ausführungsform der Fig. 4 sind beispielsweise drei Profile **4** an der Innenfläche **15** der Plane **5** angebracht.

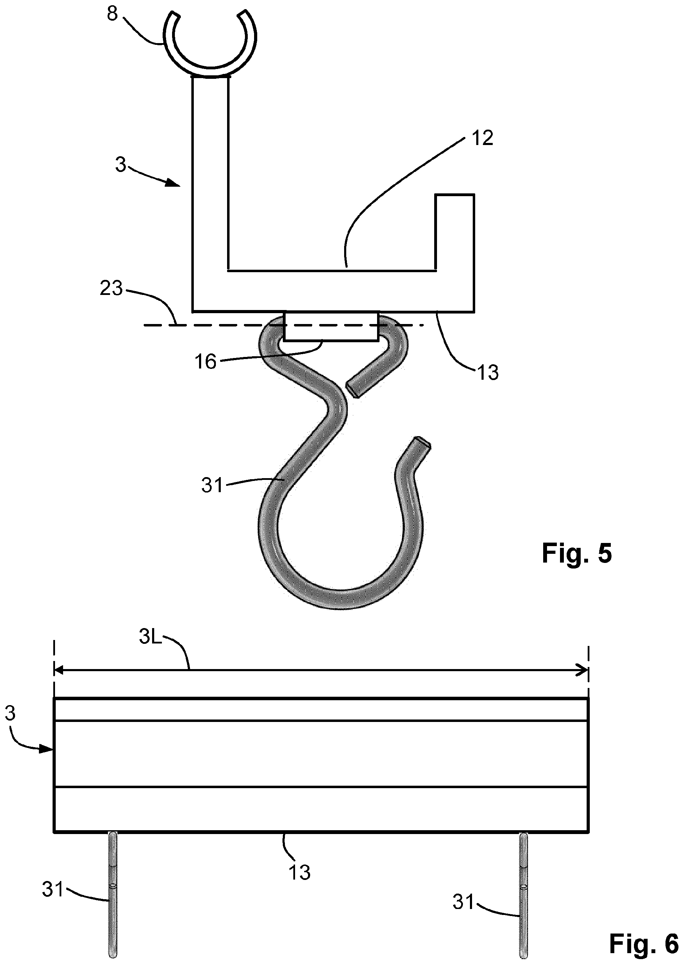

Wie der **Figur 3** und der **Figur 4** zu entnehmen ist, sind an jedem Endprofil **3** mindestens zwei Haken **31** (siehe auch Fign. 5 und 6) angebracht. An den Haken **31** kann, wie beispielsweise in den Ausführungsformen der Fig. 3 und Fig. 4 gezeigt, jeweils ein Sicherungsband **32** angebracht werden, wobei je ein Haken **31** und ein Sicherungsband **32** zusammen eine Sicherungseinrichtung **20** darstellen. Ebenso kann das mindestens eine Profil **4** an dessen beiden Enden mit einem Sicherungsband **32** versehen sein, wobei das Profil **4** und das Sicherungsband **32** zusammen eine Sicherungseinrichtung **20** darstellen. Die Sicherungsbänder **32** des Abdecksystems **1** können beispielsweise mit einer Holzschraube **21** an Holzscheiten **11** des Holstapels **203** (abzudeckendes Objekt **2**) befestigt werden.

**Figur 5** zeigt eine vergrößerte Seitenansicht einer Ausführungsform eines Endprofils **3,** das jeweils an den Enden **6** der Plane **5** des Abdecksystems **1** vorgesehen ist. Unterhalb der Rinne **12** des Endprofils **3** sind beispielsweise mindestens zwei Haken **31** beweglich angebracht. Die Frontansicht der **Figur 6** zeigt, dass entlang der Länge **3L** des Endprofils **3** mindestens zwei Haken **31** gleichverteilt angeordnet sind. Jeder Haken **31** ist in einem Lager **16** am Endprofil **3** beweglich angebracht. Aufgrund der Halterung des Lagers **16** am Endprofil **3** kann der Haken **31** entlang der Länge **3L** des Endprofils **3** um eine Achse **23** des Lagers **16** schwenken.

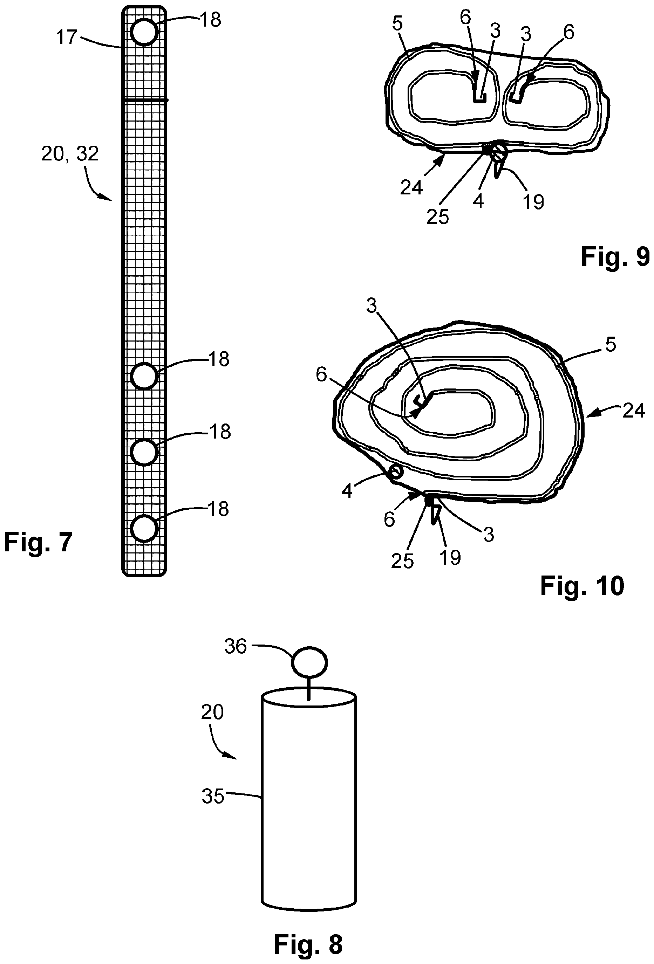

**Figur 7** zeigt eine Draufsicht auf eine Ausführungsform des Sicherungsbandes **32.** Das Sicherungsband **32** hat in einem Bereich **17** eine erste Öse **18** ausgebildet, die beispielsweise zum Einhängen des Sicherungsbandes **32** an Haken **31** (siehe Fig. 3 oder Fig. 4) oder zum Befestigen an den Profilen **4** (siehe Fig. 3 oder Fig. 4) des Abdecksystems **1** ausgebildet ist. Gegenüber dem Bereich **17** hat das Sicherungsband **32** mehrere zweite Ösen **18** ausgebildet, die zur Aufnahme einer Befestigung (nicht dargestellt) am abzudeckenden Objekt **2** dienen. Falls das abzudeckende Objekt **2** ein Holzstoß **203** ist, kann eine Holzschraube **21** (siehe Fig. 3 oder Fig. 4) in jeweils eine gegenüber dem Bereich **17** des Sicherungsbandes **32** angeordnete mindestens eine zweite Öse **18** geführt werden. Die Holzschraube **21** wird dann in ein naheliegendes Holzscheit **11** des Holzstoßes **203** eingeschraubt.

**Figur 8** zeigt eine Ausführungsform einer Sicherungseinrichtung **20,** bei der ein Gewicht **35** mit einer Einhängeöse **36** versehen ist. Das Gewicht **35** und die Einhängeöse **36** können verschiedenartig ausgestaltet sein.

**Figur 9** zeigt die Plane **5** des Abdecksystems **1** (siehe Fign. 1 bis 4) in einer Transportstellung in einer ersten Ausführungsform der Aufrollung der Plane **5.** Bevor die Plane **5** auf das abzudeckende Objekt **2,** beispielsweise einen Holzstoß **203,** aufgebracht beziehungsweise von diesem abgenommen wird, ist die Plane **5** aufgerollt. Bei dieser Ausführungsform der Aufrollung wird die Plane **5** von den beiden Endprofilen **3** von zwei gegenüberliegenden Enden **6** der Plane **5** her aufgerollt. Die Aufrollung folgt von beiden Enden **6** der Plane **5** zu dem mittleren Profil **4** der Plane **5** hin. Die aufgerollte Plane **5** wird beispielsweise mit einem Sicherungsband **24** (Transportriemen) am mittleren Stabilisierungselement **7,** beispielsweise einem Keder **7** (siehe Fig. 2), und einem entsprechenden Verschluss **25** gesichert. Die Plane **5** ist kompakt zusammengerollt und kann an einem Tragegriff **19** am mittleren Profil **4** getragen werden.

**Figur 10** zeigt die Plane **5** des Abdecksystems **1** (siehe Fig. 1 oder 3) in einer Transportstellung in einer zweiten Ausführungsform der Aufrollung der Plane **5.** Bei dieser Ausführungsform wird die Plane **5** nur von einem Ende **6** mit dem Endprofil **3** bis zum anderen Ende **6** der Plane **5** hin aufgerollt. Die aufgerollte Plane **5** wird auch hier mit einem Sicherungsband **24** und einem entsprechenden Verschluss **25** am Endprofil **3** des anderen Endes **6** der Plane **5** gesichert. Der Tragegriff **19** am Endprofil **3** am anderen Ende der Plane **5** erleichtert das Tragen und den Transport des Abdecksystems **1.**

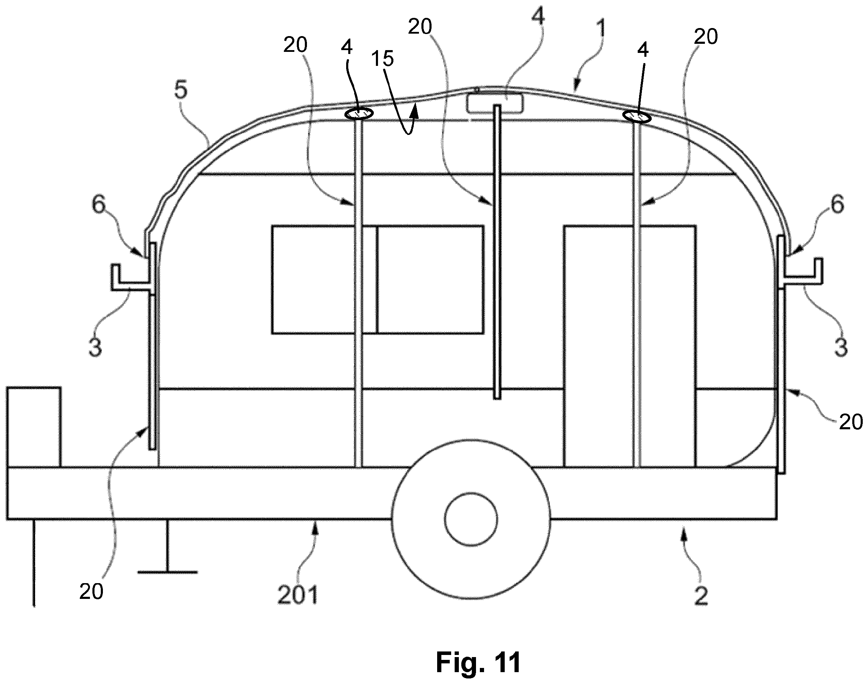

**Figur 11** zeigt eine Seitenansicht einer Ausführungsform eines Wohnanhängers **201,** der ein mögliches abzudeckendes Objekt **2** sein kann, das mit einer Ausführungsform des erfindungsgemäßen Abdecksystems **1** abgedeckt und geschützt ist. Das Abdecksystem **1** umfasst eine Plane **5,** die vorzugsweise eine wasserundurchlässige Gewebeplane ist. Die Plane **5** ist an ihren beiden Enden **6** jeweils mit einem Endprofil **3** versehen. Zwischen den beiden Endprofilen **3** ist die Plane **5** mit mindestens einem Profil **4** verbunden, das parallel zu den Endprofilen **3** verläuft. Die beiden Endprofile **3** können jeweils mit mindestens einer lösbaren Sicherungseinrichtung **20** mit dem Wohnwagen **201** verbunden werden. Ebenso kann das mindestens eine Profil **4** über ein lösbares Befestigungselement **20** (Sicherungseinrichtung) mit dem Wohnwagen **201** verbunden werden. Zusätzlich kann, falls erforderlich, die Plane **5** selbst über mindestens eine lösbare Sicherungseinrichtung **20** mit dem Wohnwagen **201** verbunden werden.

Ebenso ist die Plane **5** an der Innenfläche **15** der Plane **5** mit dem mindestens einen Profil **4** verbunden.

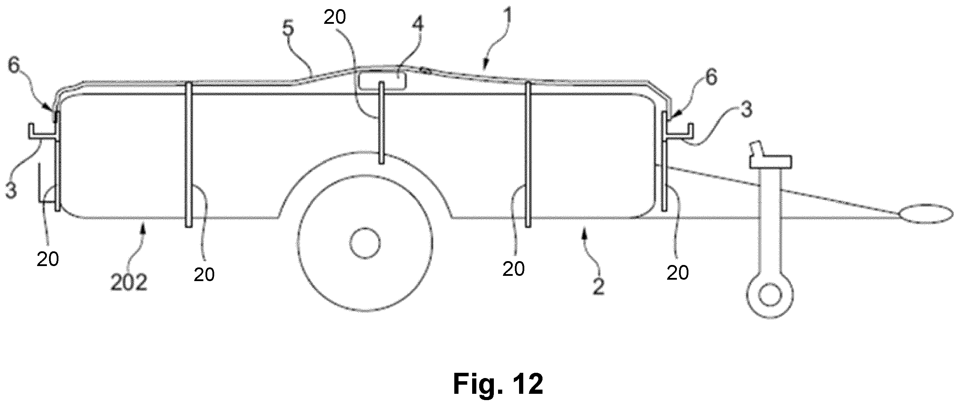

**Figur 12** zeigt eine Seitenansicht eines Anhängers **202,** der ein mögliches abzudeckendes Objekt **2** sein kann, das mit einer Ausführungsform des erfindungsgemäßen Abdecksystems **1** abgedeckt und geschützt ist. Das Abdecksystem **1** für den Anhänger **202** umfasst eine Plane **5,** die vorzugsweise eine wasserundurchlässige Gewebeplane ist. Die Plane **5** ist an ihren beiden Enden **6** jeweils mit einem Endprofil **3** versehen. Zwischen den beiden Endprofilen **3** ist die Plane **5** mit mindestens einem Profil **4** verbunden, das parallel zu den Endprofilen **3** verläuft. Die beiden Endprofile **3** können jeweils mit mindestens einer lösbaren Sicherungseinrichtung **20** mit dem Anhänger **202** verbunden werden. Ebenso kann das mindestens eine Profil **4** über eine lösbare Sicherungseinrichtung **20** mit dem Anhänger **202** verbunden werden. Zusätzlich kann, falls erforderlich, die Plane **5** selbst über mindestens eine lösbare Sicherungseinrichtung **20** mit dem Anhänger **202** verbunden werden.

Es wird angenommen, dass die vorliegende Offenbarung und viele der darin erwähnten Vorteile durch die vorhergehende Beschreibung verständlich werden. Es ist offensichtlich, dass verschiedene Änderungen in Form, Konstruktion und Anordnung der Bauteile durchgeführt werden können, ohne von dem offenbarten Gegenstand abzuweichen. Die beschriebene Form ist lediglich erklärend, und es ist die Absicht der beigefügten Schutzansprüche, solche Änderungen zu umfassen und einzuschließen. Dementsprechend sollte der Umfang der Erfindung nur durch die beigefügten Schutzansprüche beschränkt sein.

### Bezugszeichenliste

- 1: Abdecksystem
- 2: abzudeckendes Objekt
- 2B: Breite
- 2L: Länge
- 3: Endprofil
- 3L: Länge
- 4: Profil
- 5: Plane
- 5B: Breite
- 5L: Länge
- 6: Ende
- 7: Keder
- 8: Kederschiene, Kederaufnahme
- 9: Auflage
- 11: Holzscheit
- 12: Rinne
- 13: Unterseite
- 14: Außenfläche
- 15: Innenfläche
- 16: Lager
- 17: Bereich
- 18: Öse
- 19: Tragegriff
- 20: Sicherungseinrichtung, Befestigungselement
- 21: Holzschraube
- 23: Achse
- 24: Sicherungsband
- 25: Verschluss
- 31: Haken
- 32: Sicherungsband
- 35: Gewicht
- 36: Einhängeöse
- 201: Wohnanhänger, Wohnwagen
- 202: Anhänger
- 203: Holzstoß

## Patentansprüche

1. Ein Abdecksystem (1) für ein abzudeckendes Objekt (2) umfassend
eine Plane (5);
**gekennzeichnet durch**
jeweils ein Endprofil (3) mit einer Rinne (12), das an jedem Ende (6) der Plane (5) mit der Plane (5) verbunden ist; und
mindestens ein Profil (4), das zwischen den Endprofilen (3) und parallel zu diesen mit einer Innenfläche (15) der Plane (5) verbunden ist, wobei eine Länge (5L) des Abdecksystems (1) größer als eine Länge (2L) des abzudeckenden Objekts (2) ist und eine Breite (5B) des Abdecksystems (1) größer als eine Breite (2B) des abzudeckenden Objekts (2) ist.

2. Das Abdecksystem (1) nach Anspruch 1, wobei jedes Ende (6) der Plane (5) entlang der Breite (5B) einen Keder (7) trägt.

3. Das Abdecksystem (1) nach einem der vorangehenden Ansprüche, wobei jedes Endprofil (3) eine Rinne (12) und eine Kederschiene (8) aufweist, und wobei der Keder (7) an den Enden der Plane (5) formschlüssig mit der Kederschiene (8) des Endprofils (3) zusammenwirkt.

4. Das Abdecksystem (1) nach einem der vorangehenden Ansprüche, wobei an einer Unterseite (13) der Rinne (12) entlang einer Länge (3L) des Endprofils (3) mindestens zwei Haken (31) angebracht sind.

5. Das Abdecksystem (1) nach Anspruch 4, wobei jeder Haken (31) in einem Lager (16) sitzt und um eine Achse (23) des Lagers (16) schwenkbar ist.

6. Das Abdecksystem (1) nach einem der vorangehenden Ansprüche, wobei mehrere Sicherungseinrichtungen (20) am Abdecksystem vorgesehen sind, die mit dem abzudeckenden Objekt (2) lösbar verbindbar sind.

7. Das Abdecksystem (1) nach Anspruch 6, wobei die Sicherungseinrichtung (20) aus dem Haken (31) mit einem am Haken (31) einhängbaren Gewicht (35) oder aus dem Haken (31) mit einem am Haken (31) einhängbaren Sicherungsband (32) oder aus einem direkt am Profil (4) angebrachtem Sicherungsband (32) besteht.

8. Das Abdecksystem (1) nach Anspruch 7, wobei das Sicherungsband (32) in einem Bereich (17) eine erste Öse (18) ausgebildet hat, über die das Sicherungsband (32) am Haken (31) einhängbar ist.

9. Das Abdecksystem (1) nach einem der Ansprüche 7 bis 8, wobei das Sicherungsband (32) über mindestens eine zweite Öse (18) gegenüber dem Bereich (17) des Sicherungsbandes (32) mit dem abzudeckenden Objekt (2) lösbar verbindbar sind.

10. Das Abdecksystem (1) nach Anspruch 7, wobei das Gewicht (35) eine Einhängeöse (36) umfasst, mit der das Gewicht (35) am Haken (31) hängt.

11. Das Abdecksystem (1) nach Anspruch 8, wobei mindestens zwei Sicherungsbänder (32) mit jedem der an der Innenfläche (15) der Plane (5) angebrachten Profile (4) verbunden ist und über die Ösen (18) gegenüber dem Bereich (17) des Sicherungsbandes (32) mit dem abzudeckenden Objekt (2) lösbar verbindbar sind.
